# EUROPÄISCHE PATENTSCHRIFT

(11) **EP 2 251 709 B1**
(45) Veröffentlichungstag und Bekanntmachung des Hinweises auf die Patenterteilung: **26.10.2011**
(21) Anmeldenummer: 09006270.4
(22) Anmeldetag: 08.05.2009
(51) Int. Cl.: G01S 7/497

(54) **Optoelektronische Sensoranordnung zur Überwachung von Objekten**
Optoelectronic sensor assembly for monitoring objects
Installation de sensor optoélectronique destiné à la surveillance d'objets

(43) Veröffentlichungstag der Anmeldung: 17.11.2010
(73) Patentinhaber: SICK AG, 79183 Waldkirch (DE)
(72) Erfinder: Rapp, Tobias, 76467 Bietigheim (DE); Mack, Stefan, Dr., 79104 Freiburg (DE)
(74) Vertreter: Ludewigt, Christoph

(56) Entgegenhaltungen:
- DE-A1- 19 704 793
- DE-A1- 19 706 612
- DE-A1-102006 004 193
- DE-C1- 10 025 511
- DE-C1- 19 732 776
- DE-C2- 4 345 446
- DE-U1-202006 014 925

## Beschreibung

Die Erfindung betrifft eine optoelektronische Sensoranordnung zur Überwachung von Objekten gemäß dem Oberbegriff des Patentanspruchs 1.

Optoelektronische Sensoranordnungen zur Überwachung von Objekten werden in vielen Bereichen, insbesondere zur Sicherheit oder Kontrollzwecken, eingesetzt. Beispielsweise können Raumbereiche auf das Vorhandensein von Personen oder Gegenständen überwacht werden, zum Beispiel zur Sicherung von Eingangsbereichen oder zur Sicherung von gefährlichen Maschinen. Ebenso können Objekte kontrolliert werden, um ein Entfernen oder Bewegen der Objekte zu überwachen.

Es sind Vorrichtungen zur optoelektronischen Überwachung bekannt, die nach dem Scanner-Prinzip arbeiten, beispielsweise aus der DE 43 45 446 C2. Bei diesen Vorrichtungen überstreicht ein kollimierter Beleuchtungsstrahl den zu überwachenden Bereich und die von dem zu überwachenden Objekt diffus gestreute Strahlung wird durch eine Empfangseinheit überwacht. Bei diesen Vorrichtungen werden rotierende optische Systeme verwendet, die einen hohen mechanischen Herstellungs- und Montageaufwand erforderlich machen. Auch die Lebensdauer solcher mechanisch rotierender Systeme ist begrenzt.

Weiterhin bekannt sind optoelektronische Sensoranordnungen, bei welchen eine Sendeeinheit Beleuchtungsstrahlen aussendet und das mit den Beleuchtungsstrahlen beleuchtete Objekt in einem Bildgeber einer Empfangseinheit abgebildet und überwacht wird. Diese optoelektronischen Sensoranordnungen beruhen auf dem Lichtschnittverfahren oder dem Triangulationsverfahren und weisen den Vorteil auf, dass mit ihnen auch der Abstand zwischen der Sensoranordnung und dem Objekt ermittelt werden kann. Die DE 10 2006 004 193 A1 zeigt eine optoelektronische Sensoranordnung, die auf dem Lichtschnittverfahren basiert und eine Lichtsendeeinheit, eine Empfangseinheit mit einem Bildgeber und eine Frontscheibe aufweist. Die dort beschriebene optoelektronische Sensoranordnung sendet insbesondere Beleuchtungsstrahlen in einem strukturierten Beleuchtungsmuster aus, wobei das mit diesem Beleuchtungsmuster beleuchtete Objekt in dem Bildgeber der Empfangseinheit abgebildet und überwacht wird.

Die bekannten Vorrichtungen können sowohl zur Überwachung von Objekten als auch zur Überwachung von Raumbereichen eingesetzt werden. Bei der Überwachung von Objekten wird das Vorhandensein des Objekts überwacht, während bei der Überwachung von Raumbereichen das Auftreten eines Objekts in dem überwachten Raumbereich detektiert wird. Der Ausdruck "Überwachung von Objekten" soll beide Anwendungsmöglichkeiten umfassen.

Ein kompakter Aufbau und eine einfache Installation der Vorrichtung ergeben sich, wenn die Sendeeinheit und die Empfangseinheit in einem gemeinsamen Gehäuse angeordnet sind. Das Gehäuse wird durch eine Frontscheibe abgedeckt, durch welche die Beleuchtungsstrahlen austreten und durch welche die Empfangseinheit das beleuchtete Objekt beobachtet. Bei einer Verschmutzung der Frontscheibe werden die ausgesandten Beleuchtungsstrahlen und das von dem beleuchteten Objekt kommende empfangene Licht geschwächt, wodurch die Funktion der Sensoranordnung gestört werden kann. Ebenso ist eine Manipulation der Überwachung möglich, indem die Frontscheibe mehr oder weniger stark abgedeckt wird.

Bei der Vorrichtung gemäß der DE 43 45 446 C2 wird eine Verschmutzung der Frontscheibe dadurch überwacht, dass ein Lichtstrahl einer zusätzlichen Lichtquelle durch einen Bereich der Frontscheibe geschickt wird und durch einen zusätzlichen Empfänger die Intensität des durchtretenden Lichtstrahls gemessen wird. Diese Überprüfung der Verschmutzung erfordert ein zusätzliches optisches System von Sender und Empfänger. Die Überwachung der Verschmutzung erfolgt zudem nicht in dem gesamten Bereich der Frontscheibe, der für die Strahlung zur Objektüberwachung benutzt wird.

Die DE 10 2006 004 193 offenbart eine Sensoranordnung, bei welcher die Lichtsendeeinheit, die Empfangseinheit und die Frontscheibe derart in dem gemeinsamen Gehäuse angeordnet sind, dass von der Sendeeinheit ausgesandte Beleuchtungsstrahlen, die direkt reflektiert werden, nicht in die Empfangseinheit gelangen. Werden Strahlen der Sendeeinheit an der Frontscheibe diffus gestreut, so sieht die Empfangseinheit das Streulicht an der Frontscheibe getrennt von dem vom Objekt kommenden Licht. Das Auftreten von diffuser Streuung an der Frontscheibe ist ein Hinweis auf eine an der Frontscheibe abgelagerte Verschmutzung. Ebenso kann eine diffuse Streuung an der Frontscheibe dadurch verursacht werden, dass die Frontscheibe zum Zwecke einer Manipulation abgedeckt wird. Diese Sensoranordnung hat jedoch den Nachteil, dass eine Verschmutzung der Frontscheibe, welche lediglich eine Schwächung der Intensität des Beleuchtungsstrahls bewirkt, wie beispielsweise schwarzer Staub auf der Frontscheibe, nicht detektiert wird.

Die DE 20 2006 014 925 U1 offenbart einen optischen Sensor zum Nachweis von Objekten mit einer Strahlungsquelle und einem Detektor. Das Licht der Strahlungsquelle und/oder Zusatzlicht einer Zusatzquelle sind zum Überprüfen eines Verschmutzungsgrades einer Frontscheibe in die Frontscheibe einkoppelbar. Das in die Frontscheibe eingekoppelte Licht wird auf einer Vielzahl von optischen Wegen durch die Frontscheibe transmittiert und im Anschluss aus der Frontscheibe ausgekoppelt und in dem Detektor oder einem Zusatzdetektor quantitativ nachgewiesen.

Die DE 197 04 793 A1 beschreibt eine optische Sende- und Empfangseinrichtung, bei der innerhalb des Gehäuses von einer lichtdurchlässigen Abdeckung zwischen Sendeeinheit und Empfangseinheit lichtleitende Mittel vorgesehen sind, so dass der an der lichtdurchlässigen Abdeckung der Sendeeinheit reflektierte Lichtanteil zur Empfangseinheit geleitet und so die Funktionsfähigkeit der Sendeeinheit sowie die Verschmutzung der lichtdurchlässigen Abdeckung erkannt werden kann.

Die DE 197 32 776 C1 offenbart eine optoelektronische Vorrichtung zum Erfassen von Gegenständen in einem Überwachungsbereich mittels von einem in einem Gehäuse integrierten Sendeelement und einer Ablenkeinheit für die Sendelichtstrahlen die durch ein Austrittsfenster geführt sind. Zur Kontrolle der Verschmutzung des Austrittsfensters werden Testsendelichtstrahlen über Umlenkmittel zum Austrittsfenster geführt, wobei Testsendelichtstrahlen das Austrittsfenster in vertikaler Richtung durchsetzen. Die das Austrittsfenster durchsetzende Lichtmenge der Testsendelichtstrahlen wird als Maß für die Verschmutzung des Austrittsfensters ausgewertet.

Die DE 197 06 612 A1 offenbart eine optoelektronische Vorrichtung zum Erfassen von Gegenständen in einem Überwachungsbereich mit einem Sendelement, einer Ablenkeinheit und einem Austrittsfenster für die Lichtstrahlen des Sendelements. Zur Kontrolle der Verschmutzung des Austrittsfensters werden von einem zweiten Sendeelement Testsendelichtstrahlen emittiert über mit der Ablenkeinheit mitrotierende Umlenkmittel zum Austrittsfenster geführt, wobei die Testsendelichtstrahlen das Austrittsfenster in vertikaler Richtung durchsetzen. Die das Austrittsfenster durchsetzende Lichtmenge der Testsendelichtstrahlen wird als Maß für die Verschmutzung des Austrittsfensters ausgewertet.

Die DE 100 25 511 C1 betrifft eine Vorrichtung zum Orten von in einen zu überwachenden Raumbereich eindringenden Objekten, mit einem sich im Wesentlichen über 180° erstreckenden Fenster versehenen Gehäuse, in dem ein Sender und ein Empfänger für optische Strahlung sowie eine von einem Motor zum Umlauf antreibbare Drehspiegelanordnung zum Lenken eines Strahlenbündels durch das Fenster vorgesehen sind. Es ist eine Verschmutzungsüberwachungseinrichtung für das Fenster vorgesehen, die eine Reihe von entlang des Randes des Fensters angeordneten Messempfängem für durch das Fenster gesandte Messstrahlung und eine Auswerteeinrichtung hierfür umfasst. Hierbei ist an der den Messempfängern abgekehrten Seite des Fensters eine sich über die Länge des Fensters erstreckende Spiegelfläche angeordnet, die Messstrahlung von einem Messsender über einen sich mit der Drehspiegelanordnung drehenden Spiegel empfängt und durch das Fenster aufeinanderfolgend an die Messempfänger reflektiert.

Bekannt sind optoelektronische Sicherheitssensoren, welche einen Überwachungs-bereich auf Eindringen von Objekten überwachen und in Abhängigkeit davon ein Schaltsignal ausgeben, welches dazu verwendet wird, eine Anlage oder eine Maschine bei Eintreten einer Sicherheitsanforderung in einen sicheren Zustand zu überführen. Diese Sicherheitssensoren ermitteln, wenn sich eine Person einer Anlage oder einer Maschine nähert und insbesondere einen kritischen Sicherheitsabstand unterschreitet, sodass in diesem Fall die Maschine oder Anlage angehalten oder zumindest mit verminderter Betriebsgeschwindigkeit betrieben wird. Diese Sicherheitssensoren sind als sichere Sensoren im Sinne von Maschinensicherheit ausgebildet, was bedeutet, dass sichere Sensoren oder die mit ihnen verbundenen Auswerte- und/oder Steuereinheiten den einschlägigen Normen EN 954 oder EN 61508, welche sich mit der Maschinensicherheit befassen, genügen müssen, beispielsweise eine zweikanalige Struktur, Teststrukturen oder sich selbst überprüfende Strukturen aufweisen müssen oder auf sonstige Art und Weise in der Lage sein müssen, auch bei auftretenden Fehlern weiterhin zuverlässig zu funktionieren und die Fehler selbstständig zu erkennen. Gerade bei derartigen Sicherheitssensoren ist es von höchster Relevanz, sämtliche Arten von Verschmutzungen der Frontscheibe der optoelektronischen Sensoranordnung zuverlässig erkennen zu können, um die gefahrbringenden Bewegungen der Anlage oder Maschine entsprechend zu steuern, zu vermindern oder ganz anzuhalten, sodass zu keiner Zeit eine Gefahr für die entsprechende Person besteht.

Die Aufgabe der Erfindung besteht darin, eine optoelektronische Sensoranordnung bereitzustellen, welche konstruktiv einfach aufgebaut ist und mit hoher Sicherheit die Frontscheibe auf auftretende Verschmutzung oder Manipulation überwacht.

Die Aufgabe der Erfindung wird gelöst durch eine optoelektronische Sensoranordnung mit den Merkmalen des Patentanspruchs 1.

Vorteilhafte Ausgestaltungen und Weiterbildungen sind in den Unteransprüchen angegeben.

Die erfindungsgemäße optoelektronische Sensoranordnung zur Überwachung von Objekten weist eine Lichtsendeeinheit, die wenigstens einen Beleuchtungsstrahl aussendet, eine Empfangseinheit, die einen Bildgeber aufweist, auf welchen das beleuchtete Objekt abgebildet wird, und ein Gehäuse auf, in welchem die Sendeeinheit und die Empfangseinheit angeordnet sind und welches eine Frontscheibe für die Sendeeinheit und die Empfangseinheit aufweist. Die optoelektronische Sensoranordnung ist insbesondere als Lichtschnittsensor ausgebildet, bei welchem das Objekt mit der Empfangseinheit beobachtet wird, die einen Bildgeber aufweist, auf welchen das beleuchtete Objekt abgebildet wird, wobei das auf dem Bildgeber empfangene Bild entsprechend der geometrischen Gegebenheiten ausgewertet wird. Die Empfangseinheit kann insbesondere eine digitale Kamera sein. Die optoelektronische Sensoranordnung zeichnet sich erfindungsgemäß dadurch aus, dass der an der Frontscheibe reflektierte Teil des wenigstens einen Beleuchtungsstrahls auf eine diffus reflektierende Fläche fällt und der auf der diffus reflektierenden Fläche erzeugte Lichtfleck in den Bildgeber abgebildet wird. Durch eine derartige Anordnung wird es insbesondere ermöglicht, auch eine auf der Frontscheibe angeordnete absorbierende Verschmutzung, wie beispielsweise schwarzen Kohlestaub, welche lediglich einen dunkleren Lichtfleck als eine saubere Frontscheibe erzeugt, zu detektieren.

Gemäß einer bevorzugten Ausführungsform der Erfindung fällt der an der Frontscheibe reflektierte Teil des wenigstens einen Beleuchtungsstrahls auf einen Spiegel, welcher den reflektierten Teil des wenigstens einen Beleuchtungsstrahls auf die diffus reflektierte Fläche lenkt. In einer bevorzugten alternativen Ausführungsform fällt der an der Frontscheibe reflektierte Teil des wenigstens einen Beleuchtungsstrahls direkt auf die diffus reflektierende Fläche und der auf der diffus reflektierenden Fläche erzeugte Lichtfleck wird über einen Spiegel in den Bildgeber abgebildet. Diese Anordnungen ermöglichen einen besonders einfachen konstruktiven Aufbau.

Besonders bevorzugt durchtritt der an der Frontscheibe reflektierte Teil des wenigstens einen Beleuchtungsstrahls vor Abbildung in dem Bildgeber die Frontscheibe zweimal, wodurch insbesondere bei absorbierenden Verschmutzungen der Kontrast zwischen einer verschmutzten Frontscheibe und einer sauberen Frontscheibe erhöht wird, sodass Verschmutzungen besser erkannt werden können. Weiterhin kann dadurch ermöglicht werden, dass sowohl der Teil der Frontscheibe, durch den die Beleuchtungsstrahlen austreten, als auch der Teil der Frontscheibe, durch welchen die von dem Objekt kommenden Strahlen in den Empfänger eintreten, gleichzeitig auf Verschmutzungen überwacht werden.

Gemäß einer besonders bevorzugen Ausführungsform der Erfindung ist die diffus reflektierende Fläche auf der gleichen Seite der Frontscheibe angeordnet wie die Sendeeinheit und die Empfangseinheit, sodass die diffus reflektierende Fläche im Innern des Gehäuses vor Fremdlicht und anderen Außeneinwirkungen geschützt werden kann.

Besonders bevorzugt ist die diffus reflektierende Fläche außerhalb des für die Überwachung vorgesehenen Sichtbereichs des Bildgebers angeordnet, sodass die an der Frontscheibe reflektierten Beleuchtungsstrahlen auf dem Bildgeber der Empfangseinheit von der Abbildung des zu überwachenden Bereichs getrennt abgebildet werden.

Vorzugsweise ist der Spiegel auf der gleichen Seite auf der Frontscheibe angeordnet wie die Sendeeinheit und die Empfangseinheit, sodass auch der Spiegel geschützt in dem Gehäuse angeordnet ist und gegen Streulicht oder sonstige Einflüsse abgeschirmt ist.

Gemäß einer besonders bevorzugten Ausführungsform der Erfindung weist die Frontscheibe ein erstes Frontscheibenelement und ein zweites Frontscheibenelement auf, welche in einem Winkel zueinander angeordnet sind, wobei der Winkel insbesondere 90° beträgt. Die geometrische Ausgestaltung der Frontscheibe derart, dass sie geknickt ist, ermöglicht auf eine konstruktiv einfache Art und Weise, dass die diffus reflektierende Fläche auf der Innenseite des Gehäuses angeordnet sein kann und zudem der an der Frontscheibe reflektierte Teil des wenigstens einen Beleuchtungsstrahls ohne weitere Umlenkmittel, abgesehen von dem Spiegel und der diffus reflektierenden Fläche, die Frontscheibe zweimal durchtreten kann.

Eine konstruktiv einfache Ausgestaltung ergibt sich ebenfalls dadurch, dass die Winkelhalbierende des Winkels zwischen den beiden Frontscheibenelementen zwischen der Sendeeinheit und der Empfangseinheit verläuft.

Besonders bevorzugt verläuft die Winkelhalbierende parallel zu der Ebene, in welcher der wenigstens eine Beleuchtungsstrahl von der Sendeeinheit ausgesendet wird.

Vorzugsweise sind die Frontscheibenelemente als ebene Flächen ausgebildet. Dies ermöglicht einen konstruktiv einfachen Aufbau und ist insbesondere möglich, wenn von der Sendeeinheit lediglich ein einzelner Lichtstrahl ausgesendet wird.

In einer alternativen Ausführungsform der Erfindung sind die Frontscheibenelemente jeweils als Kegelstumpf ausgebildet, sodass sich eine Doppelkegelstumpfform ergibt, welche insbesondere zur Anwendung kommt, falls statt eines einzelnen Beleuchtungsstrahls eine Beleuchtung in Form einer Linie ausgesendet wird.

Vorzugsweise verläuft das erste Frontscheibenelement in einem Winkel, welcher mit Vorteil 45° beträgt, gegenüber der Ebene, in welcher der wenigstens eine Beleuchtungsstrahl von der Sendeeinheit ausgesendet wird. Die Anordnung im Winkel stellt sicher, dass der reflektierte Teil des Beleuchtungsstrahls nicht mit dem Beleuchtungsstrahl zusammenfällt. Die Anordnung in einem Winkel von 45° hat insbesondere zur Folge, dass der an der Frontscheibe reflektierte Teil des Beleuchtungsstrahls senkrecht zum Beleuchtungsstrahl verläuft.

Gemäß einer bevorzugten Ausführungsform der Erfindung sendet die Sendeeinheit einen kollimierten Laserstral, eine Laserlinie oder Beleuchtungsstrahlen, insbesondere Laserstrahlen, in einem strukturierten Beleuchtungsmuster aus. Das strukturierte Beleuchtungsmuster kann eindimensional oder zweidimensional ausgebildet sein, es kann aus diskreten Beleuchtungspunkten oder einem kontinuierlich ausgeleuchteten Muster bestehen. Insbesondere ist eine Laserlinie ein besonders einfacher Fall eines strukturierten Beleuchtungsmusters, wobei auch die Laserlinie als kontinuierlich ausgeleuchtete Linie oder beispielsweise in einer Abtastebene fächerförmig aufgespreizte Einzelstrahlen, durch welche das Objekt in diese Abtastebene durch ein in einer Linie angeordnete Punkte beleuchtet wird, ausgebildet sein kann. Durch Anwendung der Triangulation kann aus dem Bildmuster eindeutig bestimmt werden, ob sich das überwachte Objekt in dem überwachten Raumbereich befindet, sich bewegt hat oder entfernt wird oder ob ein unerwünschtes Objekt in den überwachten Raumbereich gelangt.

Besonders bevorzugt ist die optoelektronische Sensoranordnung als sichere Sensoranordnung ausgebildet, da insbesondere bei sicheren Sensoranordnungen eine zuverlässige Detektion einer Verschmutzung der Frontscheibe von höchster Relevanz ist.

Die Erfindung wird anhand der nachfolgenden Figuren ausführlich erläutert. Es zeigt:
- Figur 1:: eine schematische Darstellung eines ersten Ausführungsbeispiels einer optoelektronischen Sensoranordnung gemäß der Erfindung und
- Figur 2:: eine schematische Darstellung eines zweiten Ausführungsbeispiels ei- ner optoelektronischen Sensoranordnung gemäß der Erfindung.

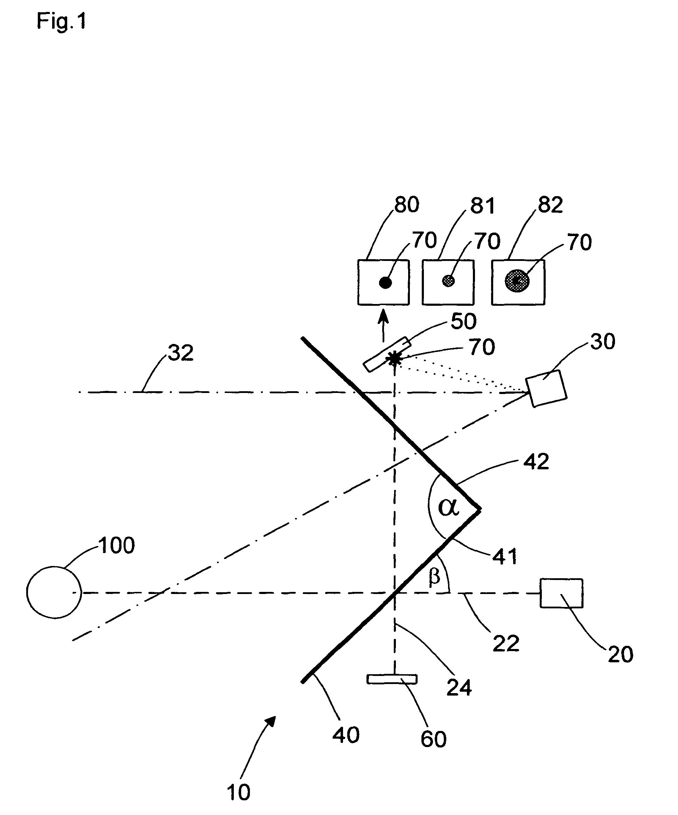

Figur 1 zeigt in schematischer Darstellung einen Schnitt durch eine optoelektronische Sensoranordnung 10, welche eine Sendeeinheit 20 und eine Empfangseinheit 30 aufweist. Die Sendeeinheit 20 sendet einen Beleuchtungsstrahl 22 aus, der beispielsweise auf ein Objekt 100 fällt, welches von der Empfangseinheit 30 beobachtet wird und sich somit insbesondere in einem zur Überwachung vorgesehen Sichtbereich 32 der Empfangseinheit 30 befindet. Als Beleuchtungsstrahl 22 wird insbesondere ein kollimierter Laserstrahl verwendet. Die Empfangseinheit 30 weist einen Bildgeber auf und kann insbesondere als digitale Kamera ausgebildet sein. Die Empfangseinheit 30 empfängt insbesondere das von dem Objekt kommende Licht und bildet es auf dem Bildgeber ab. Das auf dem Bildgeber empfangene Bild wird entsprechend der geometrischen Gegebenheiten ausgewertet. Insbesondere sind die Sendeeinheit 20 und die Empfangseinheit 30 derart zueinander angeordnet, dass eine Auswertung durch Anwendung der Triangulation erfolgen kann.

Die Sendeeinheit 20 und die Empfangseinheit 30 sind in einem Gehäuse angeordnet, von welchem in einer vereinfachten Darstellung lediglich eine Frontscheibe 40 in Figur 1 dargestellt ist. Die Frontscheibe 40 weist ein erstes Frontscheibenelement 41 und ein zweites Frontscheibenelement 42 auf, welche in einem Winkel α zueinander angeordnet sind.

Der Winkel α kann in einem derartigen Bereich variieren, dass sichergestellt ist, dass eine diffus reflektierende Fläche 50, welche nachfolgend detaillierter erläutert wird, außerhalb des Sichtbereichs 32 für die Überwachung der Empfangseinheit 30, jedoch innerhalb des vollständigen Sichtbereichs der Empfangseinheit 30 angeordnet ist. Insbesondere beträgt der Winkel α etwa 90°.

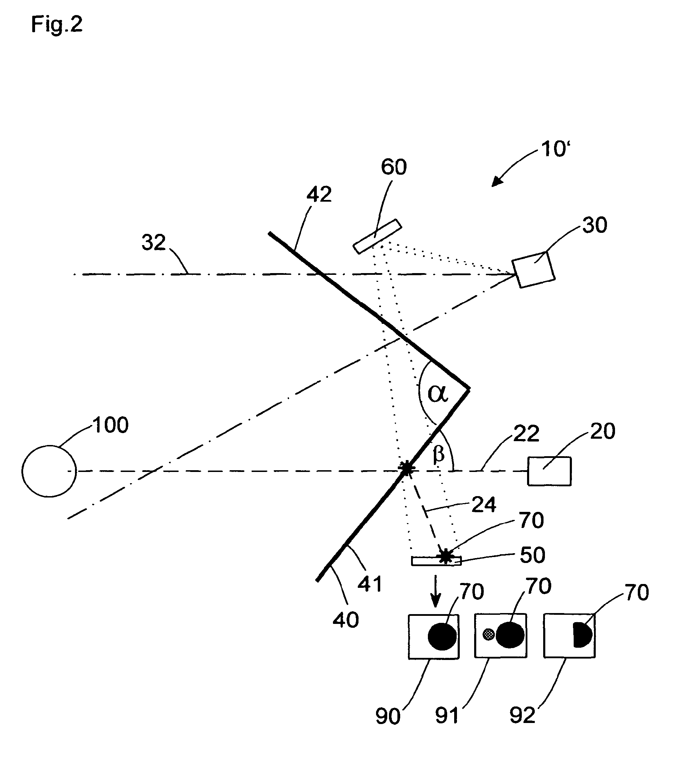

In Figur 1 und 2 ist zur Vereinfachung lediglich ein einzelner Beleuchtungsstrahl 22 der Sendeeinheit 20 dargestellt. In diesem Fall sind die Frontscheibenelemente 41, 42 als ebene Flächen ausgebildet. Die Sendeeinheit 20 kann in einem alternativen Ausführungsbeispiel Beleuchtungsstrahlen in einem strukturierten Beleuchtungsmuster aussenden, welches eindimensional oder zweidimensional ausgebildet sein kann, aus diskreten Beleuchtungspunkten oder einem kontinuierlich ausgeleuchteten Muster bestehen kann und bei welchem es sich im einfachen Fall um eine linienförmige Beleuchtung handeln kann. Bei einer Beleuchtung in Form einer Linie sind die Frontscheibenelemente 41, 42 jeweils in Form eines Kegelstumpfs ausgebildet, sodass die Frontscheibe 40 eine Doppelkegelstumpfform aufweist.

Die Frontscheibe 40 ist derart angeordnet, dass durch das erste Frontscheibenelement 41 die Beleuchtungsstrahlen 22 der Sendeeinheit 20 aus dem Gehäuse der optoelektronischen Sensoranordnung 10 austreten und das von dem Objekt 10 kommende Licht durch das zweite Frontscheibenelement 42 auf die Empfangseinheit 30 in das Gehäuse der optoelektronischen Sensoranordnung 10 eintritt. Insbesondere verläuft dazu die Winkelhalbierende des durch die beiden Frontscheibenelemente 41, 42 eingeschlossenen Winkels α zwischen der Sendeeinheit 20 und der Empfangseinheit 30. In dem in Figur 1 dargestellten Ausführungsbeispiel verläuft die Winkelhalbierende des Winkels α insbesondere parallel zu der Ebene, in welcher der Beleuchtungsstrahl 22 von der Sendeeinheit 20 ausgesendet wird, insbesondere parallel zu dem Beleuchtungsstrahl 22.

Da die Frontscheibe 40 aus den beiden im Winkel α zueinander stehenden Frontscheibenelementen 41, 42 gebildet ist, verläuft das erste Frontscheibenelement 41 in einem Winkel β gegenüber der Ebene, in welcher der Beleuchtungsstrahl 22 von der Sendeeinheit 20 ausgesendet wird, insbesondere in einem Winkel β gegenüber dem Beleuchtungsstrahl 22. Insbesondere beträgt der Winkel β etwa 45°. Dadurch, dass das erste Frontscheibenelement 41 im Winkel β gegenüber dem Beleuchtungsstrahl 22 angeordnet ist, wird bei Durchtritt des Beleuchtungsstrahls 22 durch die Frontscheibe 40 ein Teil 24 des Beleuchtungsstrahls 20 an der Frontscheibe 40 reflektiert. Beträgt der Winkel β 45°, steht insbesondere der reflektierte Teil 24 des Beleuchtungsstrahls 22 im Wesentlichen senkrecht auf dem Beleuchtungsstrahl 22. In dem ersten Ausführungsbeispiel der Erfindung, welches in Figur 1 dargestellt ist, trifft der reflektierte Teil 24 des Beleuchtungsstrahls 22 auf einen Spiegel 60, der insbesondere auf der gleichen Seite der Frontscheibe 40 angeordnet ist wie die Sendeeinheit 20. Der Spiegel 60 ist dabei insbesondere derart ausgerichtet, dass er den an der Frontscheibe 40 reflektierten Teil 24 des Beleuchtungsstrahls 23 in sich zurück reflektiert. Dieser Lichtstrahl trifft erneut auf die Frontscheibe 40, insbesondere das erste Frontscheibenelement 41, durchtritt diese abgesehen von einem geringen Teil, der erneut reflektiert wird, und fällt von außen auf das zweite Frontscheibenelement 42, das er abgesehen von einem geringfügigen Teil, der ebenfalls reflektiert wird, ebenfalls durchtritt. Insgesamt durchtritt der reflektierte Teil 24 des Beleuchtungsstrahls 22 somit die Frontscheibe 40 zweimal, sodass bei einer absorbierenden Verschmutzung eine Erniedrigung der Lichtintensität durch Transmission zweimal auftritt. Anschließend fällt er auf die diffus reflektierende Fläche 50, die auf der gleichen Seite der Frontscheibe 40 angeordnet ist wie die Empfangseinheit 30 und sich somit insbesondere ebenfalls innerhalb des Gehäuses der optoelektronischen Sensoranordnung befindet. Auf der diffus reflektierenden Fläche 50 wird ein Lichtfleck 70 erzeugt, der in den Bildgeber der Empfangseinheit 30 abgebildet wird. Die Fläche 50 befindet sich im Sichtbereich der Empfangseinheit 30, jedoch außerhalb des für die Überwachung vorgesehenen Sichtbereichs 32 der Empfangseinheit, sodass in dem Bildgeber der auf der diffus reflektierende Fläche 50 erzeugte Lichtfleck 70 und das von dem Objekt 100 kommende Licht getrennt abgebildet werden.

Die diffus reflektierende Fläche 50 kann beispielsweise als Milchglasscheibe ausgebildet sein.

In Figur 1 sind drei Abbildungen 80, 81, 82 des Lichtflecks 70 dargestellt, anhand derer die Frontscheibe 40 und eine gegebenenfalls vorhandene Verschmutzung überwacht werden können. Eine saubere Frontscheibe 40 erzeugt einen eng begrenzten Lichtfleck 70 auf der Fläche 50. Dies ist in Abbildung 80 dargestellt. Bei einer absorbierenden Verschmutzung auf der Frontscheibe 40, insbesondere entweder auf dem ersten Frontscheibenelement 41 oder auf dem zweiten Frontscheibenelement 42, welche beispielsweise durch schwarzen Kohlestaub erzeugt werden kann, ändert sich die Form des Lichtflecks 70 nicht, wird jedoch insgesamt dunkler, wie beispielsweise in Abbildung 81 dargestellt. Bei einer lichtstreuenden Verschmutzung auf der Frontscheibe 40, beispielsweise durch einen Beschlag oder Öltropfen, wird der Lichtfleck 70 diffuser und größer, wie beispielsweise in Abbildung 82 dargestellt. Befinden sich undurchsichtige Flecken auf der Frontscheibe 40, verliert der Lichtfleck 70 seine runde Form. Diese Effekte treten unabhängig davon auf, ob die Verschmutzung auf dem ersten Frontscheibenelement 41 oder dem zweiten Frontscheibenelement 42 auftritt. Anhand der Helligkeit des in dem Bildgeber der Empfangseinheit 30 detektierten Lichtflecks 70 und seiner Form auf der Fläche 50 kann somit die Verschmutzung der Frontscheibe 40 überprüft werden.

Figur 2 zeigt schematisch ein zweites Ausführungsbeispiel einer Sensoranordnung 10', welche sich von der in Figur 1 dargestellten optoelektronischen Sensoranordnung 10 lediglich in der Anordnung der diffus reflektierenden Fläche 50 und des Spiegels 60 sowie der Anordnung der Frontscheibe 40 unterscheidet. Zunächst wurde der Winkel β, unter welchem der Beleuchtungsstrahl 22 auf das erste Frontscheibenelement 41 der Frontscheibe 40 fällt, geändert, insbesondere vergrößert. Dadurch erfolgt eine Reflektion des Beleuchtungsstrahls 22 nicht mehr unter einem Winkel von 90°. Zudem fällt der reflektierte Teil 24 des Beleuchtungsstrahls 22 in dem zweiten Ausführungsbeispiel der Erfindung nach Reflektion an der Frontscheibe nicht direkt auf den Spiegel 60, wie im ersten Ausführungsbeispiel, sondern zunächst direkt auf die diffus reflektierende Fläche 50. Der auf der Fläche 50 erzeugte Lichtfleck 70 wird über den Spiegel 60 in den Bildgeber der Empfangseinheit 30 abgebildet. Der Spiegel 60 befindet sich dabei hinter dem zweiten Frontscheibenelement 41, sodass das von der diffus reflektierenden Fläche 50 kommende Licht zunächst wie bei dem ersten Ausführungsbeispiel sowohl das erste Frontscheibenelement 41 als auch das zweite Frontscheibenelement 42 durchtreten muss, bevor es auf den Spiegel 60 fällt. Selbstverständlich ist es auch bei dieser Anordnung möglich, das erste Frontscheibenelement 41 in einem Winkel β von 45° gegenüber dem Beleuchtungsstrahl 22 anzuordnen. Alternativ ist es auch in dem ersten Ausführungsbeispiel gemäß Figur 1 möglich, den Winkel β zu variieren.

Die Überwachung des Objekts 100 mit Hilfe der Empfangseinheit 30 erfolgt wie im ersten Ausführungsbeispiel. Auch in dem zweiten Ausführungsbeispiel werden der Lichtfleck 70 und das von dem Objekt 100 kommende Licht getrennt in der Empfangseinheit 30 abgebildet, da der Spiegel 60 innerhalb des Sichtbereichs der Empfangseinheit 30, jedoch außerhalb des für die Überwachung verwendeten Sichtbereichs 32 der Empfangseinheit 30 angeordnet ist.

In der Figur 2 sind drei Abbildungen 90, 91, 92 dargestellt, die die Bilder des Bildgebers bei verschiedenen Verschmutzungen darstellen. Bei einer sauberen Frontscheibe 40 wird lediglich ein begrenzter Lichtfleck 70 in dem Bildgeber der Empfangseinheit abgebildet, wie es in Abbildung 90 dargestellt ist. Bei einer streuenden Verschmutzung auf dem ersten Frontscheibenelement 41 entsteht durch das von der Frontscheibe 40, insbesondere dem ersten Frontscheibenelement 41 zurückgestreute Licht ein zweiter Lichtfleck im Sichtbereich der Empfangseinheit 30, wie es in Abbildung 91 dargestellt ist. Eine homogene absorbierende Verschmutzung ändert die Form des Lichtflecks 70 nicht und bewirkt wie im ersten Ausführungsbeispiel lediglich ein Abdunkeln des Lichtflecks 70. Befinden sich undurchsichtige Flecken auf der Frontscheibe 40, verliert der Lichtfleck 70 seine runde Form, wie es beispielsweise in Abbildung 92 dargestellt ist.

Auch das zweite Ausführungsbeispiel wurde zur Vereinfachung derart dargestellt, dass lediglich ein Beleuchtungsstrahl 22, der als kollimierter Laserstrahl ausgebildet sein kann, verwendet wird. Auch in dem zweiten Ausführungsbeispiel kann an Stelle des einzelnen Beleuchtungsstrahls 22 eine strukturierte Beleuchtung, beispielsweise eine Laserlinie, verwendet werden, sodass die Form der Frontscheibe 40 entsprechend angepasst werden muss und insbesondere in Form eines Doppelkegelstumpfes ausgebildet sein kann.

### Bezugszeichenliste

- 10: Sensoranordnung
- 10': Sensoranordnung

- 20: Sendeeinheit
- 22: Beleuchtungsstrahl
- 24: reflektierter Teil

- 30: Empfangseinheit
- 32: Sichtbereich

- 40: Frontscheibe
- 41: Frontscheibenelement
- 42: Frontscheibenelement

- 50: Fläche

- 60: Spiegel

- 70: Lichtfleck

- α: Winkel
- β: Winkel

- 80: Abbildung
- 81: Abbildung
- 82: Abbildung
- 90: Abbildung
- 91: Abbildung
- 92: Abbildung

- 100: Objekt

## Patentansprüche

1. Optoelektronische Sensoranordnung (10, 10') zur Überwachung von Objekten (100) mit einer Sendeeinheit (20), die wenigstens einen Beleuchtungsstrahl (22) aussendet, mit einer Empfangseinheit (30), die einen Bildgeber aufweist, auf welchen das beleuchtete Objekt (100) abgebildet wird, und mit einem Gehäuse, in welchem die Sendeeinheit (20) und die Empfangseinheit (30) angeordnet sind und welches eine Frontscheibe (40) für die Sendeeinheit (20) und die Empfangseinheit (30) aufweist,
**dadurch gekennzeichnet, dass** die Frontscheibe (40) ein erstes und ein zweites Frontscheibenelement (41 und 42) aufweist, welche in einem Winkel (α) zueinander angeordnet sind so dass die Frontscheibe geknickt ist und, so dass der Beleuchtungsstrahl (22) das erste Frontscheibenelement (41) durchstrahlt und das vom Objekt (100) kommende Licht das zweite Frontscheibenelement (42) durchstrahlt und ein an dem ersten Frontscheibenelement (41) reflektierter Teil (24) des wenigstens einen Beleuchtungsstrahls (22) auf eine diffus reflektierende Fläche (50) fällt, welche innerhalb des Gehäuses angeordnet ist und der auf der diffus reflektierenden Fläche (50) erzeugte Lichtfleck (70) in den Bildgeber abgebildet wird, wobei der ein dem ersten Frontscheibenelement (41) reflektierte Teil (24) des wenigstens einen Beleuchtungsstrahls (22) sowohl das erste als auch das zweite Frontscheibenelement (41 und 42) durchtritt.

2. Optoelektronische Sensoranordnung nach Anspruch 1,
**dadurch gekennzeichnet, dass** der an der Frontscheibe (40) reflektierte Teil (24) des wenigstens einen Beleuchtungsstrahls (22) auf einen Spiegel (60) fällt, welcher den reflektierten Teil (24) des wenigstens einen Beleuchtungsstrahls (22) auf die diffus reflektierende Fläche (50) lenkt.

3. Optoelektronische Sensoranordnung nach Anspruch 1,
**dadurch gekennzeichnet, dass** der an der Frontscheibe (40) reflektierte Teil (24) des wenigstens einen Beleuchtungsstrahls (22) direkt auf die diffus reflektierende Fläche (50) fällt und der auf der diffus reflektierenden Fläche erzeugte Lichtfleck (70) über einen Spiegel (60) in den Bildgeber abgebildet wird.

4. Optoelektronische Sensoranordnung nach einem der vorhergehenden Ansprüche,
**dadurch gekennzeichnet, dass** die diffus reflektierende Fläche (50) auf der gleichen Seite der Frontscheibe (40) angeordnet ist wie die Sendeeinheit (20) und die Empfangseinheit (30).

5. Optoelektronische Sensoranordnung nach einem der vorhergehenden Ansprüche,
**dadurch gekennzeichnet, dass** die diffus reflektierende Fläche (50) außerhalb des für die Überwachung vorgesehen Sichtbereichs (32) des Bildgebers angeordnet ist.

6. Optoelektronische Sensoranordnung nach einem der vorhergehenden Ansprüche 2 bis 3,
**dadurch gekennzeichnet, dass** der Spiegel (60) auf der gleichen Seite der Frontscheibe (40) angeordnet ist wie die Sendeeinheit (20) und die Empfangseinheit (30).

7. Optoelektronische Sensoranordnung nach einem der vorhergehenden Ansprüche,
**dadurch gekennzeichnet, dass** die Frontscheibe (40) ein erstes Frontscheibenelement (41) und ein zweites Frontscheibenelement (42) aufweist, welche in einem Winkel (α) zueinander angeordnet sind, wobei der Winkel (α) 90° beträgt.

8. Optoelektronische Sensoranordnung nach Anspruch 7,
**dadurch gekennzeichnet, dass** die Winkelhalbierende des Winkels (α) zwischen der Sendeeinheit (20) und der Empfangseinheit (30) verläuft.

9. Optoelektronische Sensoranordnung nach einem der Ansprüche 7 bis 8,
**dadurch gekennzeichnet, dass** die Winkelhalbierende parallel zu der Ebene verläuft, in welcher der wenigstens eine Beleuchtungsstrahl (22) von der Sendeeinheit (20) ausgesendet wird.

10. Optoelektronische Sensoranordnung nach einem der Ansprüche 7 bis 10,
**dadurch gekennzeichnet, dass** die Frontscheibenelemente (41, 42) jeweils als ebene Flächen ausgebildet sind.

11. Optoelektronische Sensoranordnung nach einem der Ansprüche 7 bis 10,
**dadurch gekennzeichnet, dass** die Frontscheibenelemente (41, 42) jeweils als Kegelstumpf ausgebildet sind.

12. Optoelektronische Sensoranordnung nach einem der Ansprüche 7 bis 11,
**dadurch gekennzeichnet, dass** das erste Frontscheibenelement (41) in einem Winkel (β), welcher insbesondere 45° beträgt, gegenüber der Ebene verläuft, in welcher der wenigstens eine Beleuchtungsstrahl (22) von der Sendeeinheit (20) ausgesendet wird.

13. Optoelektronische Sensoranordnung nach einem der vorhergehenden Ansprüche,
**dadurch gekennzeichnet, dass** die Sendeeinheit (20) einen kollimierten Laserstrahl, eine Laserlinie oder Beleuchtungsstrahlen, insbesondere Laserstrahlen, als eindimensional oder zweidimensional strukturiertes Beleuchtungsmuster aussendet.

14. Optoelektronische Sensoranordnung nach einem der vorhergehenden Ansprüche,
**dadurch gekennzeichnet, dass** die optoelektronische Sensoranordnung (10, 10') als sichere Sensoranordnung für Maschinensicherheit ausgebildet ist, wobei die Auswerte- und/oder Steuereinheit eine zweikanalige Struktur, Teststrukturen oder sich selbst überprüfende Strukturen aufweisen.

## Claims

1. Optoelectronic sensor arrangement (10, 10 ') for monitoring objects (100) with a transmitter unit (20), which emits at least one light beam (22), with a receiving unit (30), which comprises an image sensor on which the illuminated object (100) is imaged, and with a housing in which the transmitter unit (20) and the receiving unit (30) are arranged and which has a front window (40) for the transmitting unit (20) and the receiving unit (30), **characterized in that**,
the front window (40) comprises a first and a second front window element (41 and 42), which are arranged at an angle (α) so that the front window has a kink, so that the illumination beam (22) radiates through the first front window element (41) and the light coming from the object (100) radiates through the second front window element (42) and a portion (24) of the at least one light beam (22) reflected from the first front window element (41) falls on a diffuse reflective surface (50) which is located within the housing and the light spot (70) generated on the diffuse reflective surface (50) is imaged on the image sensor, whereby the portion (24) reflected from the first front window element (41) of the at least one light beam (22) passes both the first and the second front window element (41 and 42).

2. Optoelectronic sensor arrangement according to claim 1, wherein the portion (24) of the at least one light beam (22) reflected from the first front window element (41) falls on a mirror (60), which directs the reflected portion (24) of the at least one light beam (22) on the diffuse reflective surface (50).

3. Optoelectronic sensor arrangement according to claim 1, wherein the portion (24) of the at least one light beam (22) reflected from the first front window element (41) falls directly on the diffuse reflective surface (50) and the light spot (70) generated on the diffuse reflective surface is imaged onto the imager by a mirror (60).

4. Optoelectronic sensor arrangement according to any preceding claim, wherein the diffuse reflective surface (50) is arranged on the same side of the front window (40) as the transmitting unit (20) and the receiving unit (30).

5. Optoelectronic sensor arrangement according to any preceding claim, wherein the diffuse reflective surface (50) is arranged outside the field of view of the image sensor (32) necessary for surveillance.

6. Optoelectronic sensor arrangement according to any preceding claim 2 or 3, **characterized in that** the mirror (60) is arranged on the same side of the front window (40) as the transmitting unit (20) and the receiving unit (30).

7. Optoelectronic sensor arrangement according to any preceding claim, wherein the front window (40) comprises a first front window element (41) and a second front window element (42) which are arranged at an angle (α), said angle (α) is 90 °.

8. Optoelectronic sensor arrangement according to claim 7, **characterized in that** the bisecting line of the angle (α) lies between the transmitter unit (20) and the receiving unit (30).

9. Optoelectronic sensor arrangement according to claim 7 or 8, **characterized in that** the bisecting line of the angle lies parallel to the plane in which the at least one light beam (22) is emitted from the transmitting unit (20).

10. Optoelectronic sensor arrangement according to one of claims 7 to 10, wherein the front window elements (41, 42) are each formed as flat surfaces.

11. Optoelectronic sensor arrangement according to one of claims 7 to 10, wherein the front window elements (41, 42) are each formed as a truncated cone.

12. Optoelectronic sensor arrangement according to one of claims 7 to 11, wherein the first front window element (41) is arranged at an angle (β) which in particular is 45 **°** relative to the plane in which the at least one light beam (22) is emitted from the transmitting unit (20).

13. Optoelectronic sensor arrangement according to any preceding claim, wherein the transmitting unit (20) emits a collimated laser beam, a laser line or light beams, particularly laser beams, as one-dimensional or two-dimensional structured illumination pattern.

14. Optoelectronic sensor arrangement according to any preceding claim, **characterized in that** the optoelectronic sensor arrangement (10, 10') is designed as a fail-safe sensor arrangement for the machine safety, whereby the evaluation and/or control unit comprises a dual channel design, test structures design or self-checking structures design.

## Revendications

1. Dispositif de capteur optoélectronique (10, 10') pour surveiller des objets (100) avec une unité d'émetteur (20) qui émet au moins un faisceau lumineux (22), avec une unité de réception (30) qui comprend un capteur d'image sur lequel l'objet éclairé (100) est imagé, et avec un boîtier dans lequel l'unité d'émetteur (20) et l'unité de réception (30) sont disposées et qui a une vitre du front (40) pour l'unité d'émetteur (20) et l'unité de réception ( 30), **caractérisé en ce que** la vitre du front (40) comprend un premier et un deuxième élément de la vitre du front (41 et 42) qui sont disposés à un angle (α) de sorte que la vitre du front est pliée et de sorte que le faisceau lumineux (22) rayonne à travers le premier élément de la vitre du front (41) et la lumière provenant de l'objet (100) rayonne à travers le deuxième élément de la vitre du front (42) et l'incidence d'une part (24) au faisceau lumineux (22) reflétée au premier élément de vitre du front (41) est sur une surface réflectrice diffuse (50) qui est situé dans le boîtier et la tache de lumière (70) générée sur la surface réflectrice diffuse (50) est imagé sur le capteur d'image, la part (24) reflétée au premier élément de la vitre du front (41) du faisceau lumineux (22) rayonne à travers le premier et le deuxième élément de la vitre du front (41 et 42).

2. Dispositif de capteur optoélectronique selon la revendication 1, **caractérisé en ce que** la part (24) au faisceau lumineux (22) reflétée par la vitre du front (40) tombe sur un miroir (60) qui devie la part reflétée (24) du faisceau lumineux (22) sur la surface réflectrice diffuse (50).

3. Dispositif de capteur optoélectronique selon la revendication 1, **caractérisé en ce que** la part (24) du faisceau lumineux (22) reflétée par la vitre du front (40) tombe directement sur la surface réflectrice diffuse (50) et la tache de lumière (70) générée sur la surface réflectrice diffuse est imagée sur le capteur d'image par un miroir (60).

4. Dispositif de capteur optoélectronique selon une des revendications précédentes, **caractérisé en ce que** la surface réflectrice diffuse (50) est disposée sur le même côté de la vitre du front (40) que l'unité d'émetteur (20) et l'unité de réception (30).

5. Dispositif de capteur optoélectronique selon une des revendications précédentes, **caractérisé en ce que** la surface réflectrice diffuse (50) est disposée à l'extérieur du champ de vision du capteur d'image (32) nécessaire pour la surveillance.

6. Dispositif de capteur optoélectronique selon une des revendications 2 ou 3, **caractérisé en ce que** le miroir (60) est disposé sur le même côté de la vitre du front (40) que l'unité d'émetteur (20) et l'unité de réception (30).

7. Dispositif de capteur optoélectronique selon une des revendications précédentes, **caractérisé en ce que** la vitre du front (40) comprend un première élément de la vitre du front (41) et un deuxième élément de la vitre du front (42) qui sont disposés à un angle (α), ledit angle (α) est 90 °.

8. Dispositif de capteur optoélectronique selon la revendication 7, **caractérisé en ce que** la bissectrice de l'angle (α) est située entre l'unité d'émetteur (20) et l'unité de réception (30).

9. Dispositif de capteur optoélectronique selon la revendication 7 ou 8, **caractérisé en ce que** la bissectrice de l'angle est parallèle au plan dans lequel le faisceau lumineux (22) est émis par l'unité d'émetteur (20).

10. Dispositif de capteur optoélectronique selon une des revendications 7 à 10, **caractérisé en ce que** les éléments de la vitre du front (41, 42) sont formés comme des surfaces planes.

11. Dispositif de capteur optoélectronique selon une des revendications 7 à 10, **caractérisé en ce que** les éléments de la vitre du front (41, 42) sont formés chacun comme un cône tronqué.

12. Dispositif de capteur optoélectronique selon une des revendications 7 à 11, **caractérisé en ce que** le premier élément de la vitre du front (41) est disposé à un angle (β) qui est en particulier de 45 ° par rapport au plan dans lequel le faisceau lumineux (22) est émis par l'unité d'émetteur (20).

13. Dispositif de capteur optoélectronique selon une des revendications précédentes, **caractérisé en ce que** l'unité d'émetteur (20) émet un faisceau laser collimaté, une ligne de laser ou faisceaux de lumière, en particulier des faisceaux laser comme modèle d'illumination structuré unidimensionnellement ou bidimensionnellement.

14. Dispositif de capteur optoélectronique selon une des revendications précédentes, **caractérisé en ce que** le dispositif de capteur optoélectronique (10, 10 ') est développé comme un dispositif de capteur de sécurité pour la sécurité des machines, dans lequel l'unité d'évaluation et/ou de contrôle comprend un design à double canal, aux structures de test ou aux structures d'auto-contrôle.
